# EUROPEAN PATENT SPECIFICATION

(11) **EP 2 139 948 B1**
(45) Date of publication and mention of the grant of the patent: **20.06.2012**
(21) Application number: 08745129.0
(22) Date of filing: 04.04.2008
(51) Int. Cl.: C08L 67/00

(54) **POLYESTER COMPOSITIONS, METHOD OF MANUFACTURE, AND USES THEREOF**
POLYESTERZUSAMMENSETZUNGEN, HERSTELLUNGSVERFAHREN UND VERWENDUNGSVERFAHREN DAFÜR
COMPOSITIONS À BASE DE POLYESTER, PROCÉDÉ DE FABRICATION ET LEURS UTILISATIONS

(30) Priority: 06.04.2007 US 697456
(43) Date of publication of application: 06.01.2010
(73) Proprietor: SABIC Innovative Plastics IP B.V., 4612 PX Bergen op Zoom (NL)
(72) Inventor: AGARWAL, Paraminder, Evansville, IN 47712 (US); VAN GISBERGEN, Josephus Gerardus M., NL-4617 MK Bergen Op Zoom (NL); DEBNATH, Subir, Metairie, LA 70006 (US)
(74) Representative: Müller Schupfner & Partner
(86) International application number: PCT/US2008/059430
(87) International publication number: WO 2008/124604

(56) References cited:
- WO-A-2007/103007
- US-A1- 2002 115 771
- US-B1- 6 482 482

## Description

### BACKGROUND

This disclosure relates to polyester compositions, in particular impact modified polyester compositions, their methods of manufacture, and uses.

Polyesters, copolyesters, and their blends with other thermoplastics have a number of advantageous properties, in particular high mechanical strength and good processability, which make them useful in a wide variety of applications. Nonetheless, there remains a continuing need in the art for methods for improving specific property combinations in polyester compositions. One such combination is good low temperature ductility and chemical resistance. Improvements in low temperature ductility has been found to degrade the chemical resistance of polyester compositions, and conversely, improvements in chemical resistance, particularly to fuels and/or short chain alcohols, has been found to worsen low temperature ductility. A combination of low temperature ductility and good chemical resistance would be useful for articles that are manufactured by injection or blow molding processes. These features are especially useful for fuel tanks, such as gasoline containers, which must remain in contact with fuels for extended periods. These tanks are often manufactured by blow molding.

There accordingly remains a need in the art for polyester compositions that have improved low temperature ductility and good chemical resistance, particularly when articles formed from the compositions are blow molded.

### BRIEF DESCRIPTION OF THE INVENTION

The invention relates to a polyester composition comprising, based on the total weight of the composition, a reaction product of: 50 to 95 wt.% of a polyester having a number average molecular weight of greater than or equal to 42,450 g/mol, against polystyrene standards, as measured by get permeation chromatography in chloroform/hexafluoro isopropanol (5:35 volume/volume ration) at 25°C, wherein the polyester is of the formula 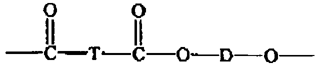 wherein each T is independently the same or different divalent C₆₋₁₀ aromatic group derived from a dicarboxylic acid or a chemical equivalent thereof, and each D is independently the same or different divalent C₂₋₄ aliphatic group derived from a dihydroxy compound or a chemical equivalent thereof; 16 to 25 wt.% of a carboxy reactive impact modifier , wherein the impact modifier is a copolymer comprising units derived from ethylene, glycidyl methacrylate, and a C₁₋₄ alkyl (meth)acrylate; and more than 0 up to and including 5 wt.% of a fluoropolymer , wherein the fluoro polymer is poly (tetrafluoethylene), and the poly (tetrafluoro ethylene) is encapsulated by a copolymer having a Tg of greater 10°C and comprising units derived from a styrene or styrene derivative and acrylanitrile; wherein the composition has less than 70 wt.% of a polyester derived from a dicarboxylic acid and an aliphatic diol component selected from the group consisting of 1,3-propylene glycol, neopentyl glycol, 1,5-pentanediol, 1,6-hexanediol, decamethylene glycol, cyclohexanediol, and 1,4-cyclohexanedimethanol, and combinations thereof.

In another embodiment, a polyester composition comprises, based on the total weight of the composition, a reaction product of: 73 to 82.5 wt.% of a polyester having a weight average molecular weight of greater than or equal to 42,450 g/mol, wherein the polyester comprises poly(ethylene terephthalate) and/or poly(1,4-butylene terephthalate); 17 to 25 wt.% of an impact modifier copolymer comprising units derived from ethylene, glycidyl methacrylate, and a C₁₋₄ alkyl (meth)acrylate; and 0.5 to 2 wt.% of poly(tetrafluoroethylene) encapsulated by a copolymer having a Tg of greater than 10°C and comprising units derived from a styrene or styrene derivative and acrylonitrile; wherein a blow molded article comprising the composition has a ductility in a multi-axial impact test of greater than or equal to 50%, measured at -30°C on a cut out sample 8.9 cm (3.5 inches) square, in accordance with ASTM D3763.

In still another embodiment a polyester composition comprises, based on the total weight of the composition, a reaction product of: 75 to 81 wt.% of a poly(1,4-butylene terephthalate) having a number average molecular weight of greater than or equal to 42,450 g/mol; 17 to 23 wt.% of an impact modifier copolymer comprising units derived from ethylene, glycidyl methacrylate, and methyl acrylate; and 0.5 to 1 wt.% of poly(tetrafluoroethylene) encapsulated by a styrene-acrylonitrile copolymer having a Tg of greater than 10°C; wherein a blow molded article comprising the composition has a ductility in a multi-axial impact test of greater than or equal to 50%, measured at -30°C on a cut out sample 8.9 cm (3.5 inches) square, in accordance with ASTM D3763; wherein the composition retains 80% or more of its initial number average molecular weight after an ASTM tensile bar of 3.2 mm thickness molded from the composition is exposed to a solvent composition comprising gasoline with a minimum octane rating of 87 for 500 hours at 70°C.

In still another embodiment a polyester composition comprises, based on the total weight of the composition, a reaction product of: (a) 75 to 81 wt.% of a poly(1,4-butylene terephthalate) having a number average molecular weight of greater than or equal to 42,450 g/mol; (b) 16 to 25 wt.% of an impact modifier copolymer comprising units derived from ethylene, glycidyl methacrylate, and methyl acrylate; and (c) 0.2 to 2 wt.% of poly(tetrafluoroethylene) encapsulated by a styrene-acrylonitrile copolymer having a Tg of greater than 10°C; wherein a blow molded article comprising the composition has a ductility in a multi-axial impact test of greater than or equal to 50%, measured at -30°C on a cut out sample 8.9 cm (3.5 inches) square, in accordance with ASTM D3763; wherein the composition retains 80% or more of its initial number average molecular weight after an ASTM tensile bar of 3.2 mm thickness molded from the composition is exposed to a solvent composition comprising gasoline with a minimum octane rating of 87 for 500 hours at 70°C; and wherein the composition has fuel permeation of less than 1.5 g/m² per day after an article having a thickness of nominal wall between 1.5 mm to 3.5 mm and molded from the composition is exposed to a fuel composition for 24 hours at 40°C after equilibrium is achieved at 40°C.

A method of forming a thermoplastic composition comprises reacting the above-described components to form the polyester composition.

Another aspect of the present disclosure relates to an article comprising the above-described polyester composition.

Also described is a method of forming an article comprising shaping, extruding, calendaring, or molding the above-described thermoplastic polyester composition.

Various other features, aspects, and advantages of the present invention will become more apparent with reference to the following description, examples, and appended claims.

### DETAILED DESCRIPTION OF THE INVENTION

The present inventors have discovered that polyester compositions with improved low temperature ductility and good chemical resistance can be obtained using specific combination of certain high molecular weight polyesters, impact modifiers, and a fluoropolymer. In particular, the compositions have good ductility and resistance to gasoline and short chain alcohols. Use of lower molecular weight polyesters does not provide the desired ductility and/or chemical resistance. These properties are especially useful for the manufacture of articles such as fuel tanks and containers for gasoline. Such properties are advantageously also obtained when the compositions are blow molded to form articles.

The singular forms "a," "an," and "the" include plural referents unless the context clearly dictates otherwise. The terms "first," "second," and the like herein do not denote any order, quantity, or importance, but rather are used to distinguish one element from another. As used herein, the "(meth)acryl" prefix includes both the methacryl and acryl. Unless defined otherwise, technical and scientific terms used herein have the same meaning as is commonly understood by one of skill. Compounds are described using standard nomenclature.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations. The endpoints of all ranges directed to the same component or property are inclusive of the endpoint and independently combinable.

All ASTM tests and data are from the 2003 edition of the Annual Book of ASTM Standards unless otherwise indicated.

Polyesters for use in the present compositions having repeating structural units of formula (I) 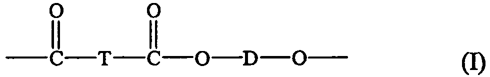 wherein each T is independently the same or different divalent C₆₋₁₀ aromatic group derived from a dicarboxylic acid or a chemical equivalent thereof, and each D is independently a divalent C_{2-4*} alkylene group derived from a dihydroxy compound or a chemical equivalent thereof. Copolyesters containing a combination of different T and/or D groups can be used. Chemical equivalents of diacids include the corresponding esters, alkyl esters, e.g., C₁₋₃ dialkyl esters, diaryl esters, anhydrides, salts, acid chlorides, acid bromides, and the like. Chemical equivalents of dihydroxy compounds include the corresponding esters, such as C₁₋₃ dialkyl esters, diaryl esters, and the like. The polyesters can be branched or linear.

Examples of C₆₋₁₀ aromatic dicarboxylic acids that can be used to prepare the polyesters include isophthalic acid, terephthalic acid, 1,2-di(p-carboxyphenyl)ethane, 4,4'-dicarboxydiphenyl ether, 4,4'-bisbenzoic acid, and the like, and 1,4- or 1,5-naphthalene dicarboxylic acids and the like. A combination of isophthalic acid and terephthalic acid can be used, wherein the weight ratio of isophthalic acid to terephthalic acid is 91:9 to 2:98, specifically 25:75 to 2:98.

Exemplary diols useful in the preparation of the polyesters include C₂₋₄ aliphatic diols such as ethylene glycol, 1,2-propylene glycol, 1,3-propylene glycol, 1,4-butane diol, 1,2-butylene diol, 1,4-but-2-ene diol, and the like. In one embodiment, the diol is ethylene and/or 1,4-butylene diol. In another embodiment, the diol is 1,4-butylene diol.

Specific exemplary polyesters include poly(ethylene terephthalate) (PET), poly(1,4-butylene terephthalate) (PBT), poly(ethylene naphthalate) (PEN), poly(butylene naphthalate) (PBN), and poly(1,3-propylene terephthalate) (PPT). In one embodiment, the polyester is PET and/or PBT. In still another specific embodiment, the polyester is PBT. It is to be understood that such terephthalate-based polyesters can include small amounts of isopthalate esters as well.

In order to attain the desired combination of ductility at low temperature and chemical resistance, the polyester has a number average molecular weight (Mn) of greater than 42,450 g/mol, specifically 52,000 to 200,000 g/mol, against polystyrene standards, as measured by gel permeation chromatography in chloroform/hexafluoroisopropanol (5:95, volume / volume ratio) at 25°C. The weight average molecular weight (Mw) of the polymers can vary widely. As illustrated by the examples below, use of lower molecular weight polyesters, or different polyesters, does not provide compositions with the desired impact properties and/or chemical resistance.

The polyesters can have an intrinsic viscosity (as measured in phenol/tetrachloroethane (60:40, volume / volume ratio) at 25°C) of 0.2 to 2.0 deciliters per gram.

Other polyesters can be present in the composition, provided that such polyesters do not significantly adversely affect the desired properties of the composition. Such additional polyesters include, for example, poly(1,4-cyclohexylendimethylene terephthalate) (PCT), poly(1,4-cyclohexylenedimethylene cyclohexane-1,4-dicarboxylate) also known as poly(cyclohexane-14-dimethanol cyclohexane-1,4-dicarboxylate) (PCCD), and poly(1,4-cyclohexylenedimethylene terephthalate-co-isophthalate) (PCTA).

Other polyesters that can be present are copolyesters derived from an aromatic dicarboxylic acid (specifically terephthalic acid and/or isophthalic acid) and a mixture comprising a linear C₂₋₆ aliphatic diol (specifically ethylene glycol and butylene glycol); and a C₆₋₁₂ cycloaliphatic diol (specifically 1,4-hexane diol, dimethanol decalin, dimethanol bicyclooctane, 1,4-cyclohexane dimethanol and its cis- and trans-isomers, 1,10-decane diol, and the like) or a linear poly(C₂₋₆ oxyalkylene) diol (specifically, poly(oxyethylene) glycol) and poly(oxytetramethylene) glycol). The ester units comprising the two or more types of diols can be present in the polymer chain as individual units or as blocks of the same type of units. Specific esters of this type include poly(1,4-cyclohexylene dimethylene co-ethylene terephthalate) (PCTG) wherein greater than 50 mol% of the ester groups are derived from 1,4-cyclohexanedimethanol; and poly(ethylene-co-1,4-cyclohexylenedimethylene terephthalate) wherein greater than 50 mol% of the ester groups are derived from ethylene (PTCG). Also included are thermoplastic poly(ester-ether) (TPEE) copolymers such as poly(ethylene-co-poly(oxytetramethylene) terephthalate. Also contemplated for use herein are any of the above polyesters with minor amounts, e.g., from 0.5 to 5 percent by weight, of units derived from aliphatic acid and/or aliphatic polyols to form copolyesters. The aliphatic polyols include glycols, such as poly(ethylene glycol) or poly(butylene glycol).

While other polyesters can be present in the compositions, it is to be understood that the compositions comprise less than 70 weight percent (wt.%), specifically less than 50 wt.%, more specifically less than 30 wt.%, even more specifically less than 10 wt.% of a polyester derived from a C₃₋₂₀ dicarboxylic acid or a chemical equivalent thereof, and an aliphatic diol or a chemical equivalent thereof, wherein the aliphatic diol is 1,3-propylene glycol, neopentyl glycol, 1,5-pentanediol, 1,6-hexanediol, decamethylene glycol, cyclohexanediol, 1,4-cyclohexanedimethanol, or a combination of the foregoing diols.

In a specific embodiment, it is desirable to limit the amount of other polyesters in the composition, in order to maintain good ductility and chemical resistance. Thus, in this embodiment, the polymer component of the composition consists essentially of PET and/or PBT, and less than 35.8 wt.% of a different polyester, specifically less than 20 wt.% of a different polyester, and even more specifically less than 10 wt.% of a different polyester, based on the total weight of the composition. In another specific embodiment, the polymer component of the composition consists of PET and/or PBT, and less than 35.8 wt.% of a different polyester, specifically less than 20 wt.% of a different polyester, and even more specifically less than 10 wt.% of a different polyester. In a preferred embodiment, the only polyester in the composition is PBT, with 0 to 10 wt.% of a different polyester. In another preferred embodiment, the only polyester in the composition is PBT.

The polyesters can be obtained by methods well known to those skilled in the art, including, for example, interfacial polymerization, melt-process condensation, solution phase condensation, and transesterification polymerization. Such polyester resins are typically obtained by the condensation or ester interchange polymerization of the diacid or diacid chemical equivalent component with the diol or diol chemical equivalent component with the component. The condensation reaction may be facilitated by the use of a catalyst of the type known in the art, with the choice of catalyst being determined by the nature of the reactants. For example, a dialkyl ester such as dimethyl terephthalate can be transesterified with butylene glycol using acid catalysis, to generate poly(butylene terephthalate).

It is possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition. The polyesters can have various known end groups. Recycled polyesters and blends of recycled polyesters with virgin polyesters can also be used. For example, the PBT can be made from monomers or derived from PET, e.g., by a recycling process.

The impact modifier used in the present compositions is a functional impact modifier, e.g., a polymeric compound that reacts with the polyester and that increases the impact resistance of the composition. The reactive part of the impact modifier can be monofunctional or polyfunctional.

The functional impact modifiers used in the present invention are carboxy reactive impact modifiers. An example of a carboxy reactive compound having impact modifying properties is a co- or ter-polymer including units of ethylene and glycidyl methacrylate (GMA), sold by Arkema. A typical composition of such a glycidyl ester impact modifier is about 67 wt.% ethylene, 25 wt.% methyl methacrylate and 8 wt.% glycidyl methacrylate impact modifier, available from Arkema under the brand name LOTADER AX8900. Another example of a carboxy reactive compound that has impact modifying properties is a terpolymer made of ethylene, butyl acrylate and glycidyl methacrylate (e.g., the ELVALOY PT or PTW series from Dupont). In one embodiment, the composition comprises mono or di epoxy compounds that do not act as a viscosity modifier.

Examples of carboxy-reactive groups include and are not limited to epoxides, carbodiimides, orthoesters, oxazolines, oxiranes, aziridines, and anhydrides. The carboxy-reactive material can also include other functionalities that are either reactive or non-reactive under the described processing conditions. Non-limiting examples of reactive moieties include reactive silicon-containing materials, for example epoxy-modified silicone and silane monomers and polymers. If desired, a catalyst or co-catalyst system can be used to accelerate the reaction between the carboxy-reactive material and the polyester.

The term "polyfunctional" or "multifunctional" in confection with the carboxy-reactive material means that at least two carboxy-reactive groups are present in each molecule of the material. Particularly useful polyfunctional carboxy-reactive materials include materials with at least two reactive epoxy groups. The polyfunctional epoxy material can contain aromatic and/or aliphatic residues. Examples include epoxy novolac resins, epoxidized vegetable (e.g., soybean, linseed) oils, tetraphenylethylene epoxide, styrene-acrylic copolymers containing pendant glycidyl groups, glycidyl methacrylate-containing polymers and copolymers, and difunctional epoxy compounds such as 3,4-epoxycyclohexylmethyl-3,4-epoxycyclohexanecarboxylate.

Suitable styrenic monomers include, but are not limited to, styrene, alpha-methyl styrene, vinyl toluene, p-methyl styrene, t-butyl styrene, o-chlorostyrene, and mixtures comprising at least one of the foregoing. In certain embodiments, the styrenic monomer is styrene and/or alpha-methyl styrene.

The difunctional epoxide compounds can be made by techniques well known to those skilled in the art. For example, the corresponding α- or β-dihydroxy compounds can be dehydrated to produce the epoxide groups, or the corresponding unsaturated compounds can be epoxidized by treatment with a peracid, such as peracetic acid, in well-known techniques. The compounds are also commercially available.

Other preferred materials with multiple epoxy groups are acrylic and/or polyolefm copolymers and oligomers containing glycidyl groups incorporated as side chains. Suitable epoxy-functional materials are available from Dow Chemical Company under the trade name D.E.R.332, D.E.R.661, and D.E.R.667; from Resolution Performance Products under the trade name EPON Resin 1001F, 1004F, 1005F, 1007F, and 1009F; from Shell Oil Corporation under the trade names EPON 826, 828, and 871; from Ciba Specialty Chemicals under the trade names CY-182 and CY-183; and from Dow Chemical Co. under the tradename ERL-4221 and ERL-4299.

The carboxy-reactive material could also be a multifunctional material having two or more reactive groups, wherein at least one of the groups is an epoxy group and at least one of the groups is a group reactive with the polyester, but is not an epoxy group. The second reactive group can be a hydroxyl, an isocyanate, a silane, and the like.

Examples of such multifunctional carboxy-reactive materials include materials with a combination of epoxy and silane functional groups, preferably terminal epoxy and silane groups. The epoxy silane is generally any kind of epoxy silane wherein the epoxy is at one end of the molecule and attached to a cycloaliphatic group and the silane is at the other end of the molecule. A desired epoxy silane within that general description is of the following formula: 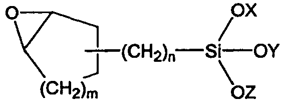 wherein m is an integer of 1, 2 or 3, n is an integer of 1 to 6, inclusive, and X, Y, and Z are the same or different, preferably the same, and are alkyl groups of one to twenty carbon atoms, inclusive, cycloalkyl of four to ten carbon atoms, inclusive, alkylene phenyl wherein alkylene is one to ten carbon atoms, inclusive, and phenylene alkyl wherein alkyl is one to six carbon atoms, inclusive. Desirable epoxy silanes within this range are compounds wherein m is 2, n is 1 or 2, desirably 2, and X, Y, and Z are the same and are alkyl of 1, 2, or 3 carbon atoms inclusive. Epoxy silanes within the range which in particular can be used are those wherein m is 2, n is 2, and X, Y, and Z are the same and are methyl or ethyl.

Such materials include, for example, β-(3,4-epoxycyclohexyl) ethyltriethoxysilane, available under the trade name CoatOSil 1770 from GE. Other examples are β-(3,4-epoxycyclohexyl) ethyltrimethoxysilane, available under the trade name Silquest A-186 from GE, and 3-glycidoxypropyltriethoxysilane, available under the trade name Silquest Y-15589 from GE.

The carboxy-reactive material is added to the polyester compositions in amounts effective to improve visual and/or measured physical properties. In one embodiment, the carboxy-reactive materials are added to the polyester compositions in an amount effective to improve the solvent resistance of the composition, in particular the fuel-resistance of the composition. A person skilled in the art may determine the optimum type and amount of any given carboxy-reactive material without undue experimentation, using the guidelines provided herein.

The chemically non-reactive part of the functional impact modifier could be derived from a variety of sources. This includes but is not limited to substantially amorphous copolymer resins, including but not limited to acrylic rubbers, ASA rubbers, diene rubbers, organosiloxane rubbers, EPDM rubbers, SBS or SEBS rubbers, ABS rubbers, MBS rubbers polyolefin such as polyethylene or polypropylene or their copolymers with each other or other olefins and glycidyl ester impact modifiers.

The acrylic rubber is a preferably core-shell polymer built up from a rubber-like core on which one or more shells have been grafted. Typical core material consists substantially of an acrylate rubber. Preferable the core is an acrylate rubber of derived from a C4 to C12 acrylate. Typically, one or more shells are grafted on the core. Usually these shells are built up for the greater part from a vinyl aromatic compound and/or vinyl cyanide and/or an alkyl(meth)acrylate and/or (meth)acrylic acid. Preferable the shell is derived from an alkyl(meth)acrylate, more preferable a methyl(meth)acrylate. The core and/or the shell(s) often comprise multi-functional compounds that may act as a cross-linking agent and/or as a grafting agent. These polymers are usually prepared in several stages. The preparation of core-shell polymers and their use as impact modifiers are described in U.S. Pat. Nos. 3,864,428 and 4,264,487. Especially preferred grafted polymers are the core-shell polymers available from Rohm & Haas under the trade name PARALOID®, including, for example, PARALOID® EXL3691 and PARALOID® EXL3330, EXL3300 and EXL2300. Core shell acrylic rubbers can be of various particle sizes. The preferred range is from 300-800 nm, however larger particles, or mixtures of small and large particles, may also be used. In some instances, especially where good appearance is required acrylic rubber with a particle size of 350-450 nm may be preferred. In other applications where higher impact is desired acrylic rubber particle sizes of 450-550 nm or 650-750 nm may be employed.

Acrylic impact modifiers contribute to heat stability and UV resistance as well as impact strength of polymer compositions. Other preferred rubbers useful herein as impact modifiers include graft and/or core shell structures having a rubbery component with a Tg (glass transition temperature) below 0° C., preferably between about -40° to about -80° C., which comprise poly-alkylacrylates or polyolefins grafted with poly(methyl)methacrylate or styrene-acrylonitrile copolymer. Preferably, the rubber content is at least about 10 % by weight, most preferably, at least about 50%.

Typical other rubbers for use as a chemically non-reactive part of the functional impact modifier herein are the butadiene core-shell polymers of the type available from Rohm & Haas under the trade name PARALOID® EXL2600. Most preferably, the impact modifier will comprise a two stage polymer having a butadiene based rubbery core, and a second stage polymerized from methyl methacrylate alone or in combination with styrene. Impact modifiers of the type also include those that comprise acrylonitrile and styrene grafted onto cross- linked butadiene polymer, which are disclosed in U.S. Pat. No. 4,292,233 herein incorporated by reference. Other suitable impact modifiers may be mixtures comprising core shell impact modifiers made via emulsion polymerization using alkyl acrylate, styrene and butadiene. These include, for example, methyl methacrylate- butadiene-styrene (MBS) and methyl methacrylate-butyl acrylate core shell rubbers.

Among the other suitable impact modifiers are the so-called block copolymers and rubbery impact modifiers, for example, A-B-A triblock copolymers and A-B diblock copolymers. The A-B and A-B-A type block copolymer rubber additives which may be used as impact modifiers include thermoplastic rubbers comprised of one or two alkenyl aromatic blocks which are typically styrene blocks and a rubber block, e.g., a butadiene block which may be partially hydrogenated. Mixtures of these triblock copolymers and diblock copolymers are especially useful.

Suitable A-B and A-B-A type block copolymers are disclosed in, for example, U.S. Pat. Nos. 3,078,254, 3,402,159, 3,297,793, 3,265,765, and 3, 594,452 and U.K. Patent 1,264,741. Examples of typical species of A--B and A--B--A block copolymers include polystyrene-polybutadiene (SB), polystyrene-poly(ethylene-propylene), polystyrene-polyisoprene, poly(α-methylstyrene)-polybutadiene, polystyrene-polybutadiene-polystyrene (SBS), polystyrene-poly(ethylene-propylene)-polystyrene, polystyrene- polyisoprene-polystyrene and poly(α-methylstyrene)-polybutadiene- poly(α-methylstyrene), as well as the selectively hydrogenated versions thereof, and the like. Mixtures comprising at least one of the aforementioned block copolymers are also useful. Such A--B and A--B--A block copolymers are available commercially from a number of sources, including Phillips Petroleum under the trademark SOLPRENE, Shell Chemical Co., under the trademark KRATON, Dexco under the trade name VECTOR, and Kuraray under the trademark SEPTON.

The composition can also comprise a vinyl aromatic-vinyl cyanide copolymer. Suitable vinyl cyanide compounds include acrylonitrile and substituted vinyl cyanides such a methacrylonitrile. Preferably, the impact modifier comprises styrene-acrylonitrile copolymer (hereinafter SAN). The preferred SAN composition comprises at least 10, preferably 25 to 28, percent by weight acrylonitrile (AN) with the remainder styrene, para-methyl styrene, or alpha methyl styrene. Another example of SANs useful herein include those modified by grafting SAN to a rubbery substrate such as, for example, 1,4-polybutadiene, to produce a rubber graft polymeric impact modifier. High rubber content (greater than 50% by weight) resin of this type (HRG-ABS) may be especially useful for impact modification of polyester resins and their polycarbonate blends.

Another preferred class of a chemically non-reactive part of the functional impact modifier is referred to as high rubber graft ABS modifiers, comprise greater than or equal to about 90% by weight SAN grafted onto polybutadiene, the remainder being free SAN. ABS can have butadiene contents between 12% and 85% by weight and styrene to acrylonitrile ratios between 90:10 and 60:40. Preferred compositions include: about 8% acrylonitrile, 43% butadiene and 49% styrene, and about 7% acrylonitrile, 50% butadiene and 43% styrene, by weight. These materials are commercially available under the trade names BLENDEX 336 and BLENDEX 415 respectively (Crompton Co.). Another preferred composition is about 8.5% acrylonitrile, 69% butadiene and 24% styrene and is available commercially under the trade name BLENDEX 338 from Crompton Co. Another example of preferred composition is SG24 rubber from Ube Cycon Limited.

Improved impact strength is obtained by melt compounding polybutylene terephthalate with ethylene homo- and copolymers functionalized with either acid or ester moieties as taught in US. Pat. Nos. 3,405,198; 3,769,260; 4,327,764; and 4,364,280. Polyblends of polybutylene terephthalate with a styrene-alpha-olefin-styrene triblock are taught in US. Pat. No. 4,119,607; US. Pat. No. 4,172,859 teaches impact modification of polybutylene terephthalate with random ethylene-acrylate copolymers and EPDM rubbers grafted with a monomeric ester or acid functionality. Preferred class of non-functionalized part of the functional impact modifier is include core-shell impact modifiers, such as those having a core of poly(butyl acrylate) and a shell of poly(methyl methacrylate).

In the present invention the polyester compositions comprise 16 to 25 wt.% of the carboxy reactive impact modifier. It has been found that 16 to 25 wt.% of an epoxy-functional copolymeric impact modifier results in excellent impact resistance and chemical resistance. Specific epoxy-functional copolymers are those comprising units derived from a C₂₋₂₀ olefin and units derived from a glycidyl (meth)acrylate. Exemplary olefins include ethylene, propylene, butylene, glycidyl methacrylate, methyl acrylate, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene. Particularly suitable impact modifiers are derived from C₂₋₆ and C₂₋₁₂ olefins. In addition to glycidyl (meth)acrylate units, the copolymers can further comprise additional units, for example C₁₋₄ alkyl (meth)acrylate units. As stated above, a specific glycidyl ester impact modifier has about 67 wt.% ethylene, 25 wt.% methyl methacrylate, and 8 wt.% glycidyl methacrylate units, and is available from Atofina under the brand name LOTADER AX8900.

To obtain useful ductility properties in articles, e.g., blow molded or injection molded articles, made from our compositions, the polyester compositions further comprise from more than 0 wt.% of a of a fluoropolymer, e.g., from 0.2 to 5 wt or from 0.5 to 5 wt.% of the fluoropolymer. Suitable fluoropolymers include particulate fluoropolymers, which are encapsulated . The fluoropolymer of the present invention is poly(tetrafluoroethylene) (PTFE) which is encapsulated .

Suitable fluoropolymers are capable of being fibrillated ("fibrillatable") during mixing, individually or collectively, with the polyester. "Fibrillation" is a term of art that refers to the treatment of fluoropolymers so as to produce, for example, a "node and fibril," network, or cage-like structure. Suitable fluoropolymers include but are not limited to homopolymers and copolymers that comprise structural units derived from one or more fluorinated alpha-olefin monomers, that is, an alpha-olefin monomer that includes at least one fluorine atom in place of a hydrogen atom. The fluoropolymer can comprise structural units derived from two or more fluorinated alpha-olefin, for example tetrafluoroethylene, hexafluoroethylene, and the like. The fluoropolymer can comprise structural units derived from one or more fluorinated alpha-olefin monomers and one or more non-fluorinated monoethylenically unsaturated monomers that are copolymerizable with the fluorinated monomers. Examples of suitable fluorinated monomers include and are not limited to alpha-monoethylenically unsaturated copolymerizable monomers such as ethylene, propylene, butene, acrylate monomers (e.g., methyl methacrylate and butyl acrylate), vinyl ethers, (e.g., cyclohexyl vinyl ether, ethyl vinyl ether, n-butyl vinyl ether, vinyl esters) and the like. Specific examples of fluoropolymers include polytetrafluoroethylene, polyhexafluoropropylene, polyvinylidene fluoride, polychlorotrifluoroethylene, ethylene tetrafluoroethylene, fluorinated ethylene-propylene, polyvinyl fluoride, and ethylene chlorotrifluoroethylene. Combinations of the foregoing fluoropolymers are possible.

Fluoropolymers are available in a variety of forms, including powders, emulsions, dispersions, agglomerations, and the like. "Dispersion" (also called "emulsion") fluoropolymers are generally manufactured by dispersion or emulsion, and generally comprise about 25 to 60 weight % fluoropolymer in water, stabilized with a surfactant, wherein the fluoropolymer particles are approximately 0.1 to 0.3 micrometers in diameter. "Fine powder" (or "coagulated dispersion") fluoropolymers can be made by coagulation and drying of dispersion-manufactured fluoropolymers. Fine powder fluoropolymers are generally manufactured to have a particle size of approximately 400 to 500 microns. "Granular" fluoropolymers can be made by a suspension method, and are generally manufactured in two different particle size ranges, including a median particle size of approximately 30 to 40 micrometers, and a high bulk density product exhibiting a median particle size of about 400 to 500 micrometers. Pellets of fluoropolymer may also be obtained and cryogenically ground to exhibit the desired particle size.

Modulated differential scanning calorimetry (MDSC) methods can be used for determining extent of fibrillation of the fluoropolymer in the various compositions can be used to monitor the course and degree of fibrillation.

The fluoropolymer is encapsulated by a rigid copolymer, i.e., a copolymer having a Tg of greater than 10°C and comprising units derived from a monovinyl aromatic monomer and units derived from a C₃₋₆ monovinylic monomer.

Monovinylaromatic monomers include vinyl naphthalene, vinyl anthracene, and the like, and monomers of formula (2): 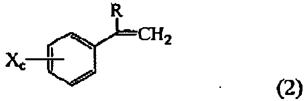 wherein each X is independently hydrogen, C₁-C₁₂ alkyl, C₃-C₁₂ cycloalkyl, C₆-C₁₂ aryl, C₇-C₁₂ arylalkyl, C₇-C₁₂ alkylaryl, C₁-C₁₂ alkoxy, C₃-C₁₂ cycloalkoxy, C₆-C₁₂ aryloxy, chloro, bromo, or hydroxy, c is 0 to 5, and R is hydrogen, C₁-C₅ alkyl, bromo, or chloro. Exemplary monovinylaromatic monomers that can be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds.

Monovinylic monomers include unsaturated monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the formula (3): 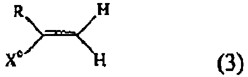 wherein R is hydrogen, C₁-C₅ alkyl, bromo, or chloro, and X^{c} is cyano, C₁-C₁₂ alkoxycarbonyl, C₁-C₁₂ aryloxycarbonyl, hydroxy carbonyl, or the like. Examples of monomers of formula (3) include acrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used. Combinations of the foregoing monovinyl monomers and monovinylaromatic monomers can also be used.

In the present invention the monovinylic aromatic monomer is styrene, alpha-methyl styrene, dibromostyrene, vinyltoluene, vinylxylene, butylstyrene, or methoxystyrene, specifically styrene and the monovinylic monomer is acrylonitrile . A useful encapsulated fluoropolymer is PTFE encapsulated in styrene-acrylonitrile (SAN), also known as TSAN.

Encapsulated fluoropolymers can be made by polymerizing the encapsulating polymer in the presence of the fluoropolymer, for example an aqueous dispersion of the fluoropolymer. Alternatively, the fluoropolymer can be pre-blended with a second polymer, such as an aromatic polycarbonate or SAN to form an agglomerated material. Either method can be used to produce an encapsulated fluoropolymer. The relative ratio of monovinyl aromatic monomer and monovinylic comonomer in the rigid graft phase can vary widely depending on the type of fluoropolymer, type of monovinylaromatic monomer(s), type of comonomer(s), and the desired properties of the composition. The rigid phase can comprise 10 to 95 wt.% of monovinyl aromatic monomer, specifically about 30 to about 90 wt.%, more specifically 50 to 80 wt.% monovinylaromatic monomer, with the balance of the rigid phase being comonomer(s). The SAN can comprise, for example, about 75 wt.% styrene and about 25 wt.% acrylonitrile based on the total weight of the copolymer. An exemplary TSAN comprises about 50 wt.% PTFE and about 50 wt.% SAN, based on the total weight of the encapsulated fluoropolymer.

The fluoropolymer used in our invention functions as a melt strength enhancer. Although the invention uses a fluoropolymer, embodiments that use other melt strength enhancers are also included within the scope of the invention. The melt strength enhancer, for instance, could be a polymeric or non-polymeric material. One class of these melt strength enhancer includes but is not limited to semicrystalline materials such as polyethylene terephthalate, poly(cyclohexanedimethylene terephthalate), poly(cyclahexanedimethylene terephthalate glycol), and poly(ethylene-co-1,4-cyclohexanedimethylene terephthalate). Another class of such melt strength enhancer includes high molecular weight polyacrylates. Examples of melt strength enhancers in this class include and are not limited to poly(methyl methacrylate) (PMMA), poly(methacrylate) (PMA), and poly(hydroxyethyl methacrylate). The fluoropolymer can be used in conjunction with the other melt strength enhancers.

In general, the polyester compositions comprise 50 to 95 wt.% of the high molecular weight polyester, 16 to 25 wt.% of the functional impact modifier, and 0.2 to 5 wt.% of the fluoropolymer, i.e., an encapsulated fluoropolymer. Within these general guidelines, the relative amounts of each component of the polyester composition will depend on the type and properties of the polyester, the type and properties (e.g., reactivity) of the impact modifier and the type and properties of the encapsulated fluoropolymer, as well as the desired properties of the polyester composition.

For example, improved properties such as low temperature ductility and chemical resistance can be obtained when the polyester compositions comprise, based on the total weight of the composition, 73 to 82.5 wt.% of the above described polyester having a number average molecular weight of greater than 42,450g/mol (for example, PET and/or PBT), specifically 75 to 81 wt.% of the above described polyester having a number average molecular weight of greater than 42,450 g/mol (for example, PBT).

Improved properties such as low temperature ductility and chemical resistance can be obtained when the polyester compositions comprise, based on the total weight of the composition, 17 to 25 wt.% of the functional impact modifier (for example, a terpolymer comprising units derived from ethylene, glycidyl methacrylate, and methyl acrylate), specifically 18 to 23 wt.% of the impact modifier (for example, a terpolymer comprising units derived from ethylene, glycidyl methacrylate, and methyl acrylate).

Improved properties such as low temperature ductility and chemical resistance can be obtained when the polyester compositions comprise, based on the total weight of the composition, 0.5 to 2 wt.% of the encapsulated fluoropolymer (for example TSAN), specifically 0.5 to 1.2 wt.% of the encapsulated fluoropolymer (for example TSAN).

The polyester composition can further comprise an optional catalyst and co-catalyst to facilitate reaction between the epoxy groups of the impact modifier and the polyester. If present, the catalyst can be a hydroxide, hydride, amide, carbonate, borate, phosphate, C₂₋₃₆ carboxylate, C₂₋₁₈ enolate, or a C₂₋₃₆ dicarboxylate of an alkali metal such as sodium, potassium, lithium, or cesium, of an alkaline earth metal such as calcium, magnesium, or barium, or other metal such as zinc or a lanthanum metal; a Lewis catalyst such as a tin or titanium compound; a nitrogen-containing compound such as an amine halide or a quaternary ammonium halide (e.g., dodecyltrimethylammonium bromide), or other ammonium salt, including a C₁₋₃₆ tetraalkyl ammonium hydroxide or acetate; a C₁₋₃₆ tetraalkyl phosphonium hydroxide or acetate; or an alkali or alkaline earth metal salt of a negatively charged polymer. Mixtures comprising at least one of the foregoing catalysts can be used, for example a combination of a Lewis acid catalyst and one of the other foregoing catalysts.

Specific exemplary catalysts include but are not limited to alkaline earth metal oxides such as magnesium oxide, calcium oxide, barium oxide, and zinc oxide, tetrabutyl phosphonium acetate, sodium carbonate, sodium bicarbonate, sodium tetraphenyl borate, dibutyl tin oxide, antimony trioxide, sodium acetate, calcium acetate, zinc acetate, magnesium acetate, manganese acetate, lanthanum acetate, sodium benzoate, sodium stearate, sodium benzoate, sodium caproate, potassium oleate, zinc stearate, calcium stearate, magnesium stearate, lanthanum acetylacetonate, sodium polystyrenesulfonate, the alkali or alkaline earth metal salt of a PBT-ionomer, titanium isopropoxide, and tetraammonium hydrogensulfate. Mixtures comprising at least one of the foregoing catalysts can be used.

The polyester compositions can include various additives ordinarily incorporated into resin compositions of this type, with the proviso that the additives are selected so as to not significantly adversely affect the desired properties of the thermoplastic composition. Exemplary additives include other polymers (including other impact modifiers), fillers, antioxidants, thermal stabilizers, light stabilizers, ultraviolet light (UV) absorbing additives, quenchers, plasticizers, lubricants, mold release agents, antistatic agents, visual effect additives such as dyes, pigments, and light effect additives, flame retardants, anti-drip agents, and radiation stabilizers. Combinations of additives can be used. The foregoing additives (except any fillers) are generally present in an amount from 0.005 to 20 wt.%, specifically 0.01 to 10 wt.%, based on the total weight of the composition.

Other polymers that can be combined with the polyesters include polycarbonates, polyamides, polyolefins, poly(arylene ether)s, poly(arylene sulfide)s, polyetherimides, polyvinyl chlorides, polyvinyl chloride copolymers, silicones, silicone copolymers, C₁₋₆ alkyl (meth)acrylate polymers (such as poly(methyl methacrylate)), and C₁₋₆ alkyl (meth)acrylate copolymers, including other impact modifiers. Such polymers are generally present in amounts of 0 to 10 wt.% of the total composition.

The composition can contain fillers. Particulate fillers include, for example, alumina, amorphous silica, anhydrous alumino silicates, mica, wollastonite, barium sulfate, zinc sulfide, clays, talc, and metal oxides such as titanium dioxide, carbon nanotubes, vapor grown carbon nanofibers, tungsten metal, barites, calcium carbonate, milled glass, flaked glass, ground quartz, silica, zeolites, and solid or hollow glass beads or spheres, and fibrillated tetrafluoroethylene. Reinforcing fillers can also be present. Suitable reinforcing fillers include fibers comprising glass, ceramic, or carbon, specifically glass that is relatively soda free, more specifically fibrous glass filaments comprising lime-alumino-borosilicate glass, which are also known as "E" glass. The fibers can have diameters of 6 to 30 micrometers. The fillers can be treated with a variety of coupling agents to improve adhesion to the polymer matrix, for example with amino-, epoxy-, amido- or mercapto-functionalized silanes, as well as with organometallic coupling agents, for example, titanium or zirconium based compounds. Fillers, however, can impair the ductility properties and are used sparingly in some embodiments. In one embodiment, the fillers are present in an amounts from 0, or more than 0 to less than 10 weight percent, based on the total weight of the composition. In another embodiment, the composition contains more than 0 to less than 5 weight percent of filler, based on the total weight of the composition.

The physical properties of the polyester composition (or an article derived from the composition) can be varied, depending on properties desired for the application. In an advantageous embodiment, articles molded from the compositions have a combination of good low temperature impact properties and chemical resistance, particularly resistance to liquid fuel. Liquid fuel as used herein includes fuels such as gasoline. Also included are fuels that contain at least 10, up to 20, up to 40, up to 60, up to 80, or even up to 90 volume percent of a C₁₋₆ alcohol, in particular ethanol and/or methanol. A mixture of ethanol and methanol is also included. In one embodiment, a liquid fuel comprises 10 to 90 volume % of regular gasoline and 10 to 90 volume % of a C₁-C₆ alcohol.

In one embodiment, an article comprising the composition, in particular an injection molded article, has a ductility in a multi-axial impact test of greater than or equal to 50%, measured with 3.2 mm thick disks at -30°C in accordance with ASTM D3763. An article comprising the composition, in particular an injection molded article, can also have a ductility in a multi-axial impact test of greater than or equal to 50%, measured with 3.2 mm thick disks at -40°C in accordance with ASTM D3763.

In another embodiment, a blow molded article comprising the composition has a ductility in a multi-axial impact test of greater than or equal to 50%, measured at -30°C in accordance with ASTM D3763 using a sample that is 8.9 cm (3.5 inches) square that has been cut out from the article. A blow molded article comprising the composition can also have a ductility in a multi-axial impact test of greater than or equal to 50%, measured at -40°C in accordance with ASTM D3763, using a sample that is 8.9 cm (3.5 inches) square that has been cut out from the article. In still another embodiment a blow molded article comprising the composition can also have a ductility in a multi-axial impact test of greater than or equal to 50%, measured at -30°C in accordance with ASTM D3763, using a sample that is 8.9 cm (3.5 inches) square that has been cut out from the article.

The compostions can further be formulated such that both an injection molded article and a blow molded article can have the above-described ductilities at - 30°C and/or at -40°C.

The compositions can also be formulated such that a molded article comprising the composition has a multi-axial impact total energy of greater than or equal to 23 J measured with 3.2 mm thick disks at -40°C in accordance with ASTM D3763.

Resistance to a liquid fuel is most conveniently determined by measuring the molecular weight of a sample of the polyester composition before and after exposure to the liquid fuel or a mixture of solvents representative of a liquid fuel. Here, an article molded from the composition, for example an ASTM tensile bar of 3.2 mm thickness, retains 80% or more of its initial number average molecular weight after exposure to a solvent composition comprising gasoline with a minimum octane rating of 87 for 500 hours at 70° C. In addition, an article molded from the composition, for example an ASTM tensile bar of 3.2 mm thickness can retain 80% or more of its initial number average molecular weight after exposure to a solvent composition comprising 85 volume% ethanol and 15 volume % gasoline for 500 hours at 70° C.

In a particularly advantageous feature, the fuel permeation of an article molded from the composition, for example an article having a nominal wall thickness from 1.5 mm to 3.5 mm can be less than 1.5 g/m² per day when the article is exposed to a fuel composition for 24 hours at 40°C after equilibrium is achieved at 40°C. In one embodiment, the fuel is an alcohol-based gasoline having 10 volume % or more of the alcohol, specifically ethanol. In still another embodiment, the fuel composition that is compliant with Phase II California Reformulated Certification fuel (CERT).

The polyester compositions are manufactured by combining the various components under conditions effective to form reaction products. For example, powdered polyester, impact modifier, encapsulated fluoropolymer, and/or other optional components are first blended, optionally with fillers in a HENSCHEL-Mixer^{®} high speed mixer. Other low shear processes, including but not limited to hand mixing, can also accomplish this blending. The blend is then fed into the throat of a twin-screw extruder via a hopper. Alternatively, one or more of the components can be incorporated into the composition by feeding directly into the extruder at the throat and/or downstream through a sidestuffer. Additives can also be compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate can be one-fourth inch long or less as desired. Such pellets can be used for subsequent molding, shaping, or forming.

The polyester compositions can be formed into shaped articles by a variety of known processes for shaping molten polymers, such shaping, extruding, calendaring, thermoforming, casting, or molding the compositions. Molding includes injection molding, rotational molding, compression molding, blow molding, and gas assist injection molding.

The compositions are particularly useful for the manufacture of articles that are exposed to fuels, e.g., fuel tanks, fuel containers, and other components that are exposed to a fuel such as gasoline. In one embodiment, such articles are blow molded and retain their advantageous low temperature ductility, chemical resistance, and low fuel permeation.

Examples of other articles include electrical connectors, enclosures for electrical equipment, e.g., a battery cover, automotive engine parts, components for electronic devices, lighting sockets and reflectors, electric motor parts, power distribution equipment, communication equipment, tiles, e.g., decorative floor tiles.

The polyester compositions are further illustrated by the following non-limiting examples. The amounts of all components in the Tables below are provided in percent by weight, based on the total weight of the blend components. Components used in the formulations are shown in Table 1.

**Table 1**

| Name | Material | Source |
|---|---|---|
| PBT 195 | Poly(1,4-butylene terephthalate), intrinsic viscosity (IV) of 0.66 cm³/g as measured in a 60:40 phenol/tetrachloroethane | General Electric Co. |
| PBT 315 | Poly(1,4-butylene terephthalate), intrinsic viscosity (IV) of 1.2 cm³/g as measured in a 60:40 phenol/tetrachloroethane | General Electric Co. |
| LOTADER AX8900 | Random terpolymer of ethylene (E), acrylic ester (AE) and glycidyl methacrylate ester (GMA) | Arkema |
| MARLED® HXM 50100 | High density polyethylene | Chevron Phillips Chemical Co. LP |
| TSAN | 50/50 wt.% Poly(tetrafluoroethylene) and poly(styrene-co-acrylonitrile) | General Electric Co. |
| Antioxidant | (Octadecyl-3-(3,5-di-tert-butyl-4-hydroxyphenyl)propionate) | Ciba Specialty Chemicals |
| Seenox 412S | Pentaerythritol beta-lauryl thiopropionate | Clariant |
| Pentaerythritol diphosphite | Bis(2,4-di-tert-butylphenyl) pentaerythritol diphosphite | Chemtura |
| Phosphite stabilizer | Tris(2,4-di-t-butylphenyl)phosphite | Ciba Specialty Chemicals |
| Cyasorb UV 5411 | 2-(2'-hydroxy-5-t-octylphenyl)-benzotriazole | Cytec Industries |
| Cycloaliphatic Epoxy Resin | 3,4-epoxy cyclohexyl methyl-3,4-epoxy cyclohexyl carboxylate | Dow Chemicals |
| Sodium stearate | Sodium stearate | Chemtura |
| PC105 | Bisphenol A polycarbonate (LEXAN® resin, Mn =29 kg/mol, GPC against polystyrene standards) | General Electric Co. |
| MBS Pellets | Methyl methacrylate-butadiene-styrene polymer | Rohm & Haas |
| Phosphorous acid | Phosphorous acid solution (45% in water) | PB&S Chemical |
| Antioxidant-2 | Pentaerythritol-tetrakis(3-(3,5-di-tert-butyl-4-hydroxy-phenyl-)propionate) | Ciba Specialty Chemicals |
| VHRG ABS Rubber | Methyl methacrylate-acrylonitrile-butadiene-styrene copolymer | General Electric Co. |
| Carbon Black | 25% carbon black concentrate in PBT | General Electric Co. |

Except where indicated, the components of the polyester compositions were prepared as follows. The material was either obtained directly from commercial sources (such as Marlex® HXM 50100 from Chevron Phillips Chemical Company LP) or was extruded using the following method. The components were tumble-blended and then extruded on a compounding line having a 27 mm Werner Pfleiderer Twin Screw Extruder with a vacuum vented co-rotating mixing screws. The temperature was set at 520°F (271°C) and screw speed at 300 revolutions per minute (rpm). The normal output rate on this line is 50 lbs (22.7 kg)/hour. The extrudate was cooled through a water bath prior to pelletizing.

Test articles can be injection molded under the following conditions. ASTM parts (such as Dynatup disks and tensile bars) were injection molded on a Van Dom molding machine (80T) using the set temperature recommended on the supplier's datasheet and approximately 500°F (260°C) for invention blends. The pellets were dried for 3 to 4 hours at 170°F (77°C) in a forced air-circulating oven prior to injection molding. It will be recognized by those skilled in the art that the method is not limited to these temperatures or to this apparatus.

Test articles can be blow molded on an APV blow molding machine with an accumulator type of processor. The machine has a 2.5-inch diameter screw with a Sterlex II Barrier Flight screw design and a barrel length/diameter ratio of 24/1. The drive motor is 50 horsepower. The accumulator design is spiral flow and has a capacity of 2.5 1b (1.1 kg) of LEXAN® 104R resin. The die diameter range is 2 to 6 inches (5 to 13 cm) and the machine has a clamp force of 30 US tons. The mold size is 20-inch (51 cm) width and 40 inch (102 cm) length. The melt temperature of the resin during blow molding was set to 500°F (260°C). The parts blow molded were standard three-step tool part (11.5 inches high, 6 inches in length) and the width of three steps is 6, 4 and 2 inches. The height of the steps is 3.5, 4 and 4 inches respectively. The cut out of the blow-molded part (3.5 inches x 3.5 inches, 8.9 x 8.9 cm) was taken from the flat side of the middle step. The nominal wall thickness of the part was between 3 and 4 mm. It will be recognized by those skilled in the art that the methods are not limited to these temperatures or to this apparatus.

Impact strength testing is based on the ASTM D3763 method. This procedure provides information on how a material behaves under multiaxial deformation conditions. The deformation applied is a high-speed puncture. An example of a supplier of this type of testing equipment is Dynatup. Properties reported include total energy absorbed (TE), which is expressed in Joules (J) and ductility of parts in percent based on whether the part fractured with a brittle or ductile punch out. The final test result is calculated as the average of the test results of typically ten test plaques for blow molded parts and five test plaques for injection-molded parts.

Fuel permeation testing was performed as described by Nulmanl et al., in "Fuel Permeation Performance of Polymeric Materials" SAE Technical Paper 2001-01-1999. In accordance with this procedure, a 1.6 mm plastic specimen was exposed to ASTM Fuel CE10 (toluene/isooctane/ethanol at a ratio of 45%/45%/10% by volume) vapor on one side and the content of the permeated vapor on the other side of the sample was measured. The exposure was conducted in sealed chambers. The permeated gases were captured on a thermal desorption trap. The composition of permeated gases was quantified using a thermal desorption unit and a GC/MS system. In an exemplary test procedure, 5 mL of the ASTM Fuel CE10 is placed in the permeation chamber. A polymer disc 22 mm in diameter is placed between Teflon O-rings. The top of the chamber is then bolted down. The inlet is connected to a nitrogen purge with a flow setting between 20 and 30 cc/min. This allows for proper gas turnover. At intervals, the flow is stopped, and a thermal desorption trap is connected to the outlet of the permeation chamber. Timing and flow are started simultaneously at this time. The trap time varied based on the barrier properties of the material and/or the sensitivity required. The trap material used is of two types: Carbotrap C used to trap hydrocarbons and not ethanol, while Carbosieve SIII retains ethanol but not hydrocarbons. A mixture of the two allows for the analysis of all target compounds. An Agilent/CDS system that has a thermal desorption unit was used to quantify the volatiles trapped as described in the section above.

The chemical resistance of the samples was evaluated by immersing the standard parts such as an ASTM tensile bar in the corresponding fuel to be tested. E85 was obtained by mixing 85 volume percent of ethanol with 15 volume percent of gasoline with a knocking rating of 87. The samples immersed in the test fuel were loading into glassware set up and sealed with a lid that has two open ports to connect the reflux condenser with water circulation and a thermometer for measuring the temperature. The constant temperature for the experiment was obtained by immersing the set up in a silicone oil bath that is heated using a standard lab heater plate with magnetic stirrer. Initial molecular weight was recorded for each sample using GPC. A sample was pulled out after predefined intervals and molecular weight by GPC. The relative performance of various samples was determined using the retention in molecular weight compared to unexposed sample. Molecular weight was determined by gel permeation chromatography (GPC). A Waters 2695 separation module equipped with a single PL HFIP gel (250 x 4.6 mm) and a Waters 2487 Dual Wavelength Absorbance Detector (signals observed at 273 nm) were used for GPC analysis. Typically, samples were prepared by dissolving 50 mg of the polymer pellets in 50 mL of 5/95 volume % hexafluoroisopropyl alcohol/chloroform solution. The results were processed using a Millennium 32 Chromatography Manager V 4.0 Reported molecular weights are relative to polystyrene standards. As used herein, "molecular weight" refers to number average molecular weight (Mn).

### Comparative examples C1-C3 and Example E1

Table 2 shows examples of formulations with three different types of impact modifier typically used in polyester matrices (C1-C3) and an example of a polyester formulation with a reactive impact modifier (E1).

**Table 2**

| Formulation | Unit | E1 | C1 | C2 | C3 |
|---|---|---|---|---|---|
| PBT 315 | % | 78.22 | 78.22 | 78.22 | 78.22 |
| LOTADER AX8900 | % | 20 | 0 | 0 | 0 |
| TSAN | % | 1 | 1 | 1 | 1 |
| Antioxidant | % | 0.1 | 0.1 | 0.1 | 0.1 |
| Seenox 412S | % | 0.3 | 0.3 | 0.3 | 0.3 |
| Pentaerythritol diphosphite | % | 0.1 | 0.1 | 0.1 | 0.1 |
| Phosphite stabilizer | % | 0.03 | 0.03 | 0.03 | 0.03 |
| Cyasorb UV 5411 | % | 0.25 | 0.25 | 0.25 | 0.25 |
| MBS Pellets | % | 0 | 20 | 10 | 0 |
| VHRG ABS Rubber | % | 0 | 0 | 10 | 20 |

The effect of the use of the reactive impact modifier on the low temperature impact on injection and blow molded parts is shown in Table 3.

**Table 3**

| Impact Testing Temperature | Molding Process | Ductility of Parts (%) | | | |
|---|---|---|---|---|---|
| | | E1 | C1 | C2 | C3 |
| 23°C | Injection | 100 | 100 | 100 | 100 |
| | Blow | 100 | 100 | 100 | 100 |
| -30°C | Injection | 100 | 100 | 100 | 100 |
| | Blow | 80 | 0 | 0 | 0 |
| -40°C | Injection | 100 | 100 | 100 | 100 |
| | Blow | 80 | 0 | 0 | 0 |

As the results in Table 3 show, the use of the reactive impact modifier allows retention of impact properties in blow molded and injection molded impact at -30°C as well as at -40°C. The improved performance (E1) over the typical polyesters (C1-C3) can be seen in the blow molding process.

### Comparative examples C4 and Example E2

In Table 4, two different types of PBT were used as follows (GPC using polystyrene standards):

| | | |
|---|---|---|
| PBT 195: | Mn = 31,500 g/mol; | Mw = 53,400 g/mol |
| PBT 315: | Mn = 54,200 g/mol; | Mw = 111,000 g/mol |

Comparative example C4 uses a 50:50 weight ratio of PBT 195 and PBT 315, which means that the number average molecular weight was 42,450 g/mol. Therefore, the composition used in this comparative example would have an effective number average molecular weight lower than that of E2 (PBT 315 alone).

**Table 4**

| component | Unit | E2 | C4 |
|---|---|---|---|
| PBT 315 | % | 78.22 | 39.11 |
| PBT 195 | % | 0 | 39.11 |
| LOTADER AX8900 | % | 20 | 20 |
| TSAN | % | 1 | 1 |
| Hindered phenol anti-oxidant | % | 0.1 | 0.1 |
| Seenox 412S | % | 0.3 | 0.3 |
| Pentaerythritol diphosphite | % | 0.1 | 0.1 |
| Phosphite stabilizer | % | 0.03 | 0.03 |
| Cyasorb UV 5411 | % | 0.25 | 0.25 |

Table 5 shows the effect of using two different PBTs on the retention of both blow molded and injection molded impact at lower temperatures.

**Table 5.**

| Impact Testing Temperature | Molding Process | Ductility of Parts (%) | |
|---|---|---|---|
| | | E2 | C4 |
| 23°C | Injection | 100 | 100 |
| | Blow | 100 | 100 |
| -30°C | Injection | 100 | 100 |
| | Blow | 80 | 0 |
| -40°C | Injection | 100 | 100 |
| | Blow | 80 | 0 |

The results in Table 5 demonstrate that surprisingly only the higher molecular weight PBT was able to retain both injection and blow molded impact at lower temperature (-30°C and -40°C). These results show that the PBT having a number average molecular weight greater than 42,450 g/mol resulted in good low temperature impact under blow and injection molding conditions. These results contrast with the results of Comparative example C4, which used a 50:50 weight ratio of PBT 195 and PBT 315 having a number average molecular weight was 42,450 g/mol and which did not exhibit good low temperature impact under blow and injection molding conditions

### Comparative examples C5-C9 and Examples E3 and E4

Comparative examples C5-C7 and examples E3 and E4 are formulations with varying amounts of a reactive impact modifier, as well as a catalyst and a cycloaliphatic resin. Impact properties of the examples are also shown in Table 6. Comparative example C8 contains a non-reactive impact modifier (MBS). Comparative example C9 is a high-density polyethylene, in particular MARLEX® HXM 50100 from Chevron Phillips Chemical Company LP)

**Table 6**

| Formulation | E3 | E4 | C5 | C6 | C7 | C8 |
|---|---|---|---|---|---|---|
| PBT 315 | 78.2 | 78.175 | 83.2 | 82.6 | 77.6 | 64.8 |
| PC-105 | - | - | - | - | - | 15 |
| LOTADER AX8900 | 20 | 20 | 15 | 15 | 20 | |
| MBS Pellets | - | - | - | - | - | 18 |
| TSAN | 1 | 1 | 1 | 1 | 1 | 1 |
| Hindered phenol anti-oxidant | 0.1 | 0.1 | 0.1 | 0.1 | 0.1 | - |
| Hindered phenol anti-oxidant -2 | - | - | - | - | - | 0.08 |
| Seenox 412S | 0.3 | 0.3 | 0.3 | 0.3 | 0.3 | 0.05 |
| Pentaerythritol diphosphite | 0.1 | 0.1 | 0.1 | 0.1 | 0.1 | - |
| Phosphite stabilizer | 0.03 | 0.03 | 0.03 | 0.03 | 0.03 | - |
| Cyasorb UV 5411 | 0.25 | 0.25 | 0.25 | 0.25 | 0.25 | - |
| Cycloaliphatic epoxy resin | 0 | 0 | 0 | 0.6 | 0.6 | - |
| Sodium stearate | 0 | 0.025 | 0.025 | 0.025 | 0.025 | 0.025 - |
| Phosphorous acid (45% in water) | - | - | - | - | - | 0.05 |
| Carbon Black Concentrate | - | - | - | - | - | 0.95 |
| Properties | | | | | | |
| Blow Molding Temperature (°C) | 260 | 260 | 260 | 260 | 260 | 260 |
| Blow Molding Impact at 23°C | 100 | 100 | 100 | 100 | 100 | 100 |
| Blow Molding Impact at -30°C | 80 | 60 | 0 | 10 | 0 | 0 |

As indicated by the impact data in Table 6, greater than 15 wt.% of the impact modifier results in good low temperature impact performance in both blow molded and injection molded parts. The addition of sodium stearate into the formulation gives good low temperature impact performance; however, the presence of both sodium stearate and cycloaliphatic epoxy resin negatively impacts the overall impact performance. Comparative example C8, with a non-reactive impact modifier (MBS) is outperformed by the composition with a reactive impact modifier (examples E3 and E4). Comparative example C9 (a high-density polyethylene, MARLEX® HXM 50100 from Chevron Phillips Chemical Company LP) represents a typical polyethylene used in the fuel industry and maintains good low temperature impact performance.

The chemical resistance of polyester compositions is another key property in the performance of molded parts. For applications such as liquid fuel containers, resistance to gasoline and gasoline fuel with alcohol desirable. Table 7 shows chemical resistance under stringent conditions, i.e., exposure to a fuel having 15 vol.% gasoline and 85 vol.% ethanol at a temperature of 70°C.

**Table 7**

| Sample | Retention in number average mol wt. (Mₙ) | | | |
|---|---|---|---|---|
| | 0 Days | 7 Days | 14 Days | 21 Days |
| E3 | 100 | 100 | 95 | 90 |
| E4 | 100 | 97 | 90 | 81 |
| C5 | 100 | 99 | 95 | 84 |
| C6 | 100 | 94 | 90 | 82 |
| C7 | 100 | 99 | 95 | 86 |
| C8 | 100 | 78 | 79 | 69 |

As shown in Table 7, all formulations show good retention of the number average molecular weight, with the exception of C8. In contrast to comparative examples C5-C7, however, examples E3 and E4, have a combination of good low impact performance and good chemical resistance.

The permeation of fuel in container parts is another property of interest in the fuel tank industry. Table 10 shows results from the measurement of the permeation of fuel after equilibrium is reached at 40°C.

**Table 8**

| Property | E3 | C8 | C9 |
|---|---|---|---|
| Exposure Time post at 40°C (hrs.) | 48 | 48 | 48 |
| Total Permeation (g/m²-day) | 0.1 | 0.12 | 68.7 |

The results of Table 8 illustrate that C9 did not exhibit good permeation as defined as values lower than the new California Air Resources Board standard of 1.5 g/m² per day. However, both E3 and C8 maintained a good barrier to fuel permeation. Furthermore, E3 exhibited a combination of good low impact performance, good chemical resistance and a good barrier to fuel permeation.

A week-by-week comparison of the permeation of E3 and C8 with C10 fuel is shown in Table 9.

**Table 9**

| Exposure Time | Total Permeation (g/m²-day) | |
|---|---|---|
| | E3 | C8 |
| 72 Hours | 0.34 | .45 |
| 1 Week | 0.2 | 0.2 |
| 2 Week | 0.09 | 0.08 |
| 3 Week | 0.07 | 0.08 |
| 5 Week | 0.12 | 0.12 |
| 6 Week | 0.11 | 0.12 |
| 7 Week | 0.10 | 0.12 |

The results indicate that E3 and C8 performed well and an equilibrium was reached under the conditions of the experiment at 40°C in C10 fuel and at the thickness of 1.6 mm.

While the invention has been illustrated and described in typical embodiments, it is not intended to be limited to the details shown, since various modifications and substitutions are possible without departing from the spirit of the present invention. As such, modifications and equivalents of the invention herein disclosed may occur to persons skilled in the art using no more than routine experimentation, and all such modifications and equivalents are believed to be within the spirit and scope of the invention as defined by the following claims.

## Claims

1. A polyester composition comprising, based on the total weight of the composition, a reaction product of:
50 to 95 wt.% of a polyester having a number average molecular weight of greater than or equal to 42,450 g/mol, against polystyrene standards, as measured by gel permeation chromatography in chloroform/hexafluoroisopropanol (5:95 volume/volume ratio) at 25°C, wherein the polyester is of the formula 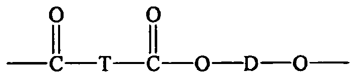 wherein each T is independently the same or different divalent C₆₋₁₀ aromatic group derived from a dicarboxylic acid or a chemical equivalent thereof, and each D is independently the same or different divalent C₂₋₄ aliphatic group derived from a dihydroxy compound or a chemical equivalent thereof;
16 to 25 wt.% of a carboxy reactive impact modifier, wherein the impact modifier is a copolymer comprising units derived from ethylene, glycidyl methacrylate, and a C₁₋₄ alkyl (meth)acrylate; and
more than 0 up to and including 5 wt.% of a fluoropolymer, wherein the fluoropolymer is poly(tetrafluoroethylene), and the poly(tetrafluoroethylene) is encapsulated by a copolymer having a Tg of greater 10°C and comprising units derived from a styrene or styrene derivative and acrylonitrile;
wherein the composition has less than 70 wt.% of a polyester derived from a dicarboxylic acid and an aliphatic diol component selected from the group consisting of 1,3-propylene glycol, neopentyl glycol, 1,5-pentanediol, 1,6-hexanediol, decamethylene glycol, cyclohexanediol, and 1,4-cyclohexanedimethanol, and combinations thereof.

2. The composition of Claim 1, wherein an injection molded article comprising the composition has a ductility in a multi-axial impact test of greater than or equal to 50%, measured with 3.2 mm thick disks at -30°C in accordance with ASTM D3763; or a ductility in a multi-axial impact test of greater than or equal to 50%, measured with 3.2 mm thick disks at -40°C in accordance with ASTM D3763.

3. The composition of Claim 1, wherein a blow molded article comprising the composition has a ductility in a multi-axial impact test of greater than or equal to 50%, measured at -30°C on a sample 8.9 cm square, in accordance with ASTM D3763; or a ductility in a multi-axial impact test of greater than or equal to 50%, measured at -40°C on a sample 8.9 cm square, in accordance with ASTM D3763.

4. The composition of any of Claims 1 - 3, wherein the composition retains 80% or more of its initial number average molecular weight after an ASTM tensile bar of 3.2 mm thickness molded from the composition is exposed to a solvent composition comprising gasoline with minimum octane rating of 87 for 500 hours at 70°C; the composition retains 80% or more of its initial number average molecular weight after an ASTM tensile bar of 3.2 mm thickness molded from the composition is exposed to a solvent composition comprising 85 percent ethanol and 15 percent gasoline for 500 hours at 70°C; the composition has fuel permeation of less than 1.5 g/m² per day after an article having a thickness of nominal wall between 1.5 mm to 3.5 mm and molded from the composition is exposed to a fuel composition for 24 hours at 40°C after equilibrium is achieved at 40°C; the composition has fuel permeation of less than 1.5 g/m² per day after a article having a thickness of nominal wall between 1.5 mm to 3.5 mm and molded from the composition is exposed to any alcohol based gasoline with minimum 10% alcohol for 24 hours at 40°C after equilibrium is achieved at 40°C; or the composition has fuel permeation of less than 1.5 g/m² per day after a article having a thickness of nominal wall between 1.5 mm to 3.5 mm and molded from the composition is exposed to a fuel composition that is compliant with Phase II California Reformulated Certification fuel for 24 hours at 40°C after equilibrium is achieved at 40°C.

5. The composition of any of Claims 1 - 4, wherein the composition contains less than 10 wt.% of a filler.

6. The composition of any of Claims 1 - 5 , further comprising a catalyst, wherein the catalyst is a hydroxide, hydride, amide, carbonate, borate, phosphate, C₂₋₁₈ enolate, C₂₋₃₆ dicarboxylate, or C₂₋₃₆ carboxylate of a metal; a Lewis acid catalyst; a C₁₋₃₆ tetraalkyl ammonium hydroxide or acetate; a C₁₋₃₆ tetraalkyl phosphonium hydroxide or acetate; an alkali or alkaline earth metal salt of a negatively charged polymer; or a combination comprising at least one of the foregoing catalysts.

7. The composition of any of Claims 1-6, wherein the polyester is poly(butylene terephthalate).

8. The composition of Claim 7, wherein the impact modifier comprises units derived from ethylene, glycidyl methacrylate, and methyl acrylate.

9. The composition of any of Claims 1 - 8, wherein the composition has less than 50 wt.% of a polyester derived from a dicarboxylic acid and an aliphatic diol component selected from the group consisting of 1,3-propylene glycol, neopentyl glycol, 1,5-pentanediol, 1,6-hexanediol, decamethylene glycol, cyclohexanediol, and 1,4-cyclohexanedimethanol, and combinations thereof.

10. The composition of any of Claims 1 - 8, comprising
73 to 82.5 wt.% of the polyester, wherein the polyester comprises poly(ethylene terephthalate) and/or poly(1,4-butylene terephthalate);
17 to 25 wt.% of the impact modifier copolymer, wherein impact modifier copolymer comprises units derived from ethylene, glycidyl methacrylate, and a C₁₋₄ alkyl (meth)acrylate; and
0.5 to 2 wt.% of the fluoropolymer, wherein the fluoropolymer is poly(tetrafluoroethylene), and the poly(tetrafluoroethylene) is encapsulated by a copolymer having a Tg of greater 10°C and comprising units derived from a styrene or styrene derivative and acrylonitrile.

11. A method for the manufacture of the composition of any of Claims 1 - 10, comprising blending the components of the composition of any of Claims 1 - 10.

12. An article comprising the composition of any of Claims 1 -10.

13. The article of Claim 12, wherein the article is a blow molded container for gasoline.

14. A method of forming an article, comprising shaping, extruding, calendaring, injection molding, rotationally molding, compression molding, blow molding, or gas assisted injection molding the composition of any of Claims 1 - 10 to form the article.

## Patentansprüche

1. Polyesterzusammensetzung, umfassend, bezogen auf das Gesamtgewicht der Zusammensetzung, ein Reaktionsprodukt von folgendem:
50 bis 95 Gew.-% von einem Polyester mit einem Zahlenmittelmolekulargewicht von größer oder gleich 42,450 g/mol, gegen Polystyrol-Standards, wie gemessen durch Gelpermeationschromatographie in Chloroform/Hexanfluorisopropanol (Verhältnis 5:95 Vol./Vol.) bei 25 °C, wobei der Polyester die Formel 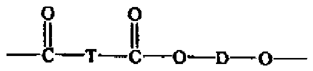 aufweist,
wobei T jeweils unabhängig die gleiche oder eine verschiedene zweiwertige C₆₋₁₀-aromatische Gruppe ist, die sich von einer Dicarbonsäure oder einem chemischen Äquivalent davon ableitet, und D jeweils unabhängig die gleiche oder eine verschiedene zweiwertige C₂₋₄-aliphatische Gruppe ist, die sich von einer Dihydroxyverbindung oder von einem chemischen Äquivalent davon ableitet;
16 bis 25 Gew.-% von einem Carboxy-reaktiven Schlagzähigkeitsmodifizierer, wobei der Schlagzähigkeitsmodifizierer ein Copolymer ist, umfassend Einheiten, die sich von Ethylen, Glycidylmethacrylat und einem C₁-₄-Alkyl(meth)acrylat ableiten; und
mehr als 0 bis zu und einschließlich 5 Gew.-% von einem Fluorpolymer, wobei das Fluorpolymer Poly(tetrafluorethylen) ist, und das Poly(tetrafluorethylen) von einem Polymer mit einer Tg von größer als 10 °C verkapselt ist und umfassend Einheiten, die sich von einem Styrol oder Styrolderivat und Acrylnitril ableiten;
wobei die Zusammensetzung weniger als 70 Gew.-% von einem Polyester aufweist, der sich von einer Dicarbonsäure und einer aliphatischen Diolkomponente ableitet, die aus der Gruppe ausgewählt ist, bestehend aus 1,3-Propylenglycol, Neopentylglycol, 1,5-Pentandiol, 1,6-Hexandiol, Decamethylenglycol, Cyclohexandiol und 1,4-Cyclohexandimethanol,
und Kombinationen davon.

2. Zusammensetzung nach Anspruch 1, wobei ein spritzgegossener Gegenstand, der die Zusammensetzung umfasst, eine Duktilität in einem multiaxialen Schlagzähigkeitstest von größer oder gleich 50 % aufweist, gemessen mit 3,2 mm dicken Scheiben bei -30 °C gemäß ASTM D3763; oder eine Duktilität in einem multiaxialen Schlagzähigkeitstest von größer oder gleich 50 % aufweist, gemessen mit 3,2 mm dicken Scheiben bei - 40 °C gemäß ASTM D3763.

3. Zusammensetzung nach Anspruch 1, wobei ein blasgeformter Gegenstand, der die Zusammensetzung umfasst, eine Duktilität in einem multiaxialen Schlagzähigkeitstest von größer als oder gleich 50 % aufweist, gemessen bei -30 °C mit einer Probe von 8,9 cm² gemäß ASTM D3763; oder eine Duktilität in einem multiaxialen Schlagzähigkeitstest von größer oder gleich 50 % aufweist, gemessen bei -40 °C mit einer Probe von 8,9 cm² gemäß ASTM D3763.

4. Zusammensetzung nach einem der Ansprüche 1-3, wobei die Zusammensetzung 80 % oder mehr ihres ursprünglichen Zahlenmittelmolekulargewichts beibehält, nachdem ein aus der Zusammensetzung geformter ASTM-Zugstab von 3,2 mm Dicke einer Lösungsmittelzusammensetzung, die Benzin mit einer minimalen Oktanzahl von 87 umfasst, für 500 Stunden bei 70 °C ausgesetzt wurde; die Zusammensetzung 80 % oder mehr von ihrem ursprünglichen Zahlenmittelmolekulargewichts beibehält, nachdem ein aus der Zusammensetzung geformter ASTM-Zugstab von 3,2 mm Dicke einer Lösungsmittelzusammensetzung, die 85 % Ethanol und 15 % Benzin umfasst, für 500 Stunden bei 70 °C ausgesetzt wurde; die Zusammensetzung eine Kraftstoffpermeation von weniger als 1,5 g/m² pro Tag aufweist, nachdem ein Gegenstand mit einer nominalen Wanddicke zwischen 1,5 mm bis 3,5 mm und geformt aus der Zusammensetzung, einer Kraftstoffzusammensetzung für 24 Stunden bei 40 °C ausgesetzt wurde, nachdem das Gleichgewicht bei 40 °C erreicht wurde; die Zusammensetzung eine Kraftstoffpermeation von weniger als 1,5 g/m² pro Tag aufweist, nachdem ein Gegenstand mit einer nominalen Wanddicke zwischen 1,5 mm bis 3,5 mm und geformt aus der Zusammensetzung, einem alkoholbasierten Benzin mit einem Minimum von 10 % Alkohol für 24 Stunden bei 40 °C ausgesetzt wurde; oder die Zusammensetzung eine Kraftstoffpermeation von weniger als 1,5 g/m² pro Tag aufweist, nachdem ein Gegenstand mit einer nominalen Wanddicke zwischen 1,5 mm bis 3,5 mm und geformt aus der Zusammensetzung einer Kraftstoff-Zusammensetzung, die konform ist mit Phase II California Reformulated Certification Kraftstoff, für 24 Stunden bei 40 °C ausgesetzt wurde, nachdem das Gleichgewicht bei 40 °C erreicht wurde.

5. Zusammensetzung nach einem der Ansprüche 1-4, wobei die Zusammensetzung weniger als 10 Gew.-% eines Füllstoffs enthält.

6. Zusammensetzung nach einem der Ansprüche 1-5, weiterhin umfassend einen Katalysator, wobei der Katalysator ein Hydroxid, Hydrid, Amid, Carbonat, Borat, Phosphat, C₂₋₁₈-Enolat, C₂₋₃₆-Dicarboxylat, oder ein C₂-₃₆-Carboxylat von einem Metall ist; ein Lewis-Säure-Katalysator, ein C₁-₃₆-Tetraalkylammoniumhydroxid oder-acetat; ein Alkali- oder Erdalkalimetallsalz von einem negativ geladenen Polymer; oder eine Kombination, umfassend mindestens einen der vorgenannten Katalysatoren, ist.

7. Zusammensetzung nach einem der Ansprüche 1-6, wobei der Polyester Poly(butlyenterephthalat) ist.

8. Zusammensetzung nach Anspruch 7, wobei der Schlagzähigkeitsmodifizierer Einheiten umfasst, die sich von Ethylen, Glycidylmethacrylat und Methylacrylat ableiten.

9. Zusammensetzung nach einem der Ansprüche 1-8, wobei die Zusammensetzung weniger als 50 Gew.-% von einem Polyester aufweist, der sich von einer Dicarbonsäure und einer aliphatischen Diolkomponente ableitet, die aus der Gruppe ausgewählt ist, bestehend aus 1,3-Propenglycol, Neopentylglycol, 1,5-Pentandiol, 1,6-Hexandiol, Decamethylenglycol, Cyclohexandiol und 1,4-Cyclohexandimethanol, und Kombinationen davon.

10. Zusammensetzung nach einem der Ansprüche 1-8, folgendes umfassend 73 bis 82,5 % des Polyesters, wobei der Polyester Poly(ethylenterephthalat) und/oder Poly(1,4-butylenterephthalat) umfasst;
17 bis 25 Gew.-% des Schlagzähigkeitsmodifizierer-Copolymers, wobei das Schlagzäigkeitsmodifizierer-Colpolymer Einheiten umfasst, die sich von Ethylen, Glycidylmethacrylat und einem C₁₋₄Alkyl(meth)acrylat ableiten; und
0,5 bis 2 Gew.-% des Fluorpolymers, wobei das Fluorpolymer Poly(tetrafluorethylen) ist, und das Poly(tetrafluorethylen) von einem Copolymer mit einer Tg von größer als 10 °C verkapselt ist und umfassend Einheiten, die sich von einem Styrol oder Styrolderivat und Acrylnitril ableiten.

11. Verfahren zur Herstellung der Zusammensetzung nach einem der Ansprüche 1-10, umfassend das Mischen der Komponenten der Zusammensetzung nach einem der Ansprüche 1-10.

12. Gegenstand, umfassend die Zusammensetzung nach einem der Ansprüche 1-10.

13. Gegenstand nach Anspruch 12, wobei der Gegenstand ein blasgeformter Behälter für Benzin ist.

14. Verfahren zum Formen eines Gegenstands, umfassend Formen, Extrudieren, Kalandrieren, Spritzgießen, Rotationsformen, Druckformen, Blasformen, oder gasunterstütztes Spritzgießen der Zusammensetzung nach einem der Ansprüche 1-10, um den Gegenstand zu formen.

## Revendications

1. Composition de polyester comprenant à base du poids total de la composition, un produit de réaction de:
50 à 95 % en poids d'un polyester ayant un poids moléculaire moyenne en nombre supérieur ou égal à 42,450 g/mol, à l'égard des standards polystyrène tel que mesuré par la chromatographie par perméation de gel au sein de chloroforme/hexafluoroisopropanol (rapport volumique de 5:95) à 25°C,
dans laquelle le polyester est de la formule suivante: 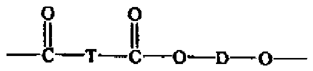 dans laquelle chaque T est indépendamment le même ou différent groupe divalent aromatique en C₆₋₁₀ dérivé d'un acide dicarboxylique ou d'un équivalent chimique de celui-ci, et chaque D est indépendamment le même ou différent groupe divalent aliphatique en C₂₋₄ dérivé d'un composé dihydroxy ou d'un équivalent chimique de celui-ci ;
16 à 25 % en poids d'un modificateur d'impact carboxy-réactif, dans laquelle le modificateur d'impact est un copolymère comprenant des unités dérivées d'éthylène, méthacrylate de glycidyle, et d'un (méth)acrylate d'alkyle en C₁₋₄ ; et
plus de 0 jusqu'à et inclusivement 5 % en poids d'un fluoropolymère, dans lequel le fluoropolymère est le poly(tetrafluoroethylène), et le poly(tetrafluoroethylène) est encapsulé par un polymère ayant une Tg supérieure à 10°C et comprenant des unités dérivées d'un styrène ou un dérivé styrènique et de l'acrylonitrile ;
dans laquelle la composition a moins de 70 % en poids d'un polyester dérivé d'un acide dicarboxylique et d'un composant diol aliphatique sélectionné parmi le groupe consistant en le 1,3 propylène glycol, le neopéntyle glycol, le 1,5-pentanediol, le 1,6-hexanediol, le décaméthylène glycol, le cyclohexane diol, et le 1,4-cyclohexanediméthanol, et les combinaisons de ceux-ci.

2. Composition selon la revendication 1, dans laquelle un article moulé par injection comprenant la composition a une ductilité dans un test d'impact multiaxial supérieure ou égale à 50%, mesurée sur des disques d'une épaisseur de 3,2 mm à -30°C selon ASTM D3763 ; ou une ductilité dans un test d'impact multiaxial supérieure ou égale à 50%, mesurée sur des disques d'une épaisseur de 3,2 mm à -40°C selon ASTM D3763.

3. Composition selon la revendication 1, dans laquelle un article moulé par gonflage comprenant la composition a une ductilité dans un test d'impact multiaxial supérieure ou égale à 50%, mesurée sur un échantillon de 8,9 centimètre carré à -30°C selon ASTM D3763 ; ou une ductilité dans un test d'impact multiaxial supérieure ou égale à 50%, mesurée sur un échantillon de 8,9 centimètre carré à -40°C selon ASTM D3763.

4. Composition selon l'une des revendications 1-3, dans laquelle la composition retient 80% ou plus de son poids moléculaire moyenne en nombre initial après que une barre de traction d'une épaisseur de 3,2 mm moulé de la composition soit exposée à un composition de solvants comprenant de l'essence avec un indice d'octane minimal de 87 pour 500 heures à 70°C ; la composition retient 80% ou plus de son poids moléculaire moyenne en nombre initial après que une barre de traction d'une épaisseur de 3,2 mm moulé de la composition soit exposée à un composition de solvants comprenant 85 % d'éthanol et 15 % d'essence pour 500 heures à 70°C ; la composition a une perméation de carburant inférieure à 1,5 g/m² par jour après qu'un article ayant une épaisseur de paroi nominale entre 1,5 mm à 3,5 mm et moulé de la composition soit exposé à une composition de carburant pour 24 heures à 40°C après qu'un équilibre soit atteint à 40°C ; la composition a une perméation de carburant inférieure à 1,5 g/m² par jour après qu'un article ayant une épaisseur de paroi nominale entre 1,5 mm à 3,5 mm et moulé de la composition soit exposé à une essence quelconque à base d'alcool avec un minimum de 10% d'alcool pour 24 heures à 40°C après qu'un équilibre soit atteint à 40°C ; ou la composition a une perméation de carburant inférieure à 1,5 g/m² par jour après qu'un article ayant une épaisseur de paroi nominale entre 1,5 mm à 3,5 mm et moulé de la composition soit exposé à une composition d'essence qui est conforme à l'essence de Phase II California Reformulated Certifiation pour 24 heures à 40°C après qu'un équilibre soit atteint à 40°C.

5. Composition selon l'une des revendications 1-4, dans laquelle la composition contient moins de 10 % en poids d'une charge.

6. Composition selon l'une des revendications 1-5, comprenant en outre un catalyseur, dans laquelle le catalyseur est un hydroxyde, un hydride, amide, carbonate, borate, phosphate, énolate en C₂₋₁₈, dicarboxylate en C₂₋₃₆, ou carboxylate en C₂₋₃₆ d'un métal; un catalyseur d'acide de Lewis, un hydroxyde ou un acétate de tétra-alkyl ammonium en C₁₋₃₆ ; un hydroxyde ou un acétate de tétra-alkyl phosphonium en C₁₋₃₆ ; un sel de métal alcalin ou d'alcalino-terreux d'un polymère chargé négativement ; ou une combinaison comprenant au moins l'un des catalyseurs précédents.

7. Composition selon l'une des revendications 1-6, dans laquelle le polyester est le poly(butylène téréphtalate).

8. Composition selon la revendication 7, dans laquelle le modificateur d'impact comprend des unités dérivées de l'éthylène, glycidyle méthacrylate et méthyle acrylate.

9. Composition selon l'une des revendications 1-8, dans laquelle la composition a moins de 50 % en poids d'un polyester dérivé d'un acide dicarboxylique et un composant diol aliphatique sélectionné parmi le groupe consistant en le 1,3-propylène glycol, le neopéntyle glycol, le 1,5-pentanediol, le 1,6-hexanediol, le décaméthylène glycol, le cyclohexanediol, et le 1,4-cyclohexanediméthanol, et les combinaisons de ceux-ci.

10. Composition selon l'une des revendications 1-8, comprenant 73 à 82,5 % en poids du polyester, dans lequel le polyester comprend du poly(éthylène téréphtalate) et/ou du poly(1,4-butylene téréphtalate) ;
17 à 25 % en poids du copolymère modificateur d'impact, dans lequel le copolymère modificateur d'impact comprend des unités dérivées d'éthylène, de méthacrylate de glycidyle, et d'un (méth)acrylate d'alkyle en C_{1 4} ; et
0,5 à 2 % en poids du fluoropolymère, dans lequel le fluoropolymère est le poly(tetrafluoroethylène), et le poly(tetrafluoroethylène) est encapsulé par un copolymère ayant une Tg supérieure à 10°C et comprenant des unités dérivées d'un styrène ou un dérivé de styrène et acrylonitrile.

11. Procédé de fabrication de la composition selon l'une des revendications 1-10, comprenant l'étape de mélanger les composants de la composition selon l'une des revendications 1-10.

12. Article comprenant la composition selon l'une des revendications 1-10.

13. Article selon la revendication 12, dans lequel l'article est un récipient pour l'essence moulé par gonflage.

14. Procédé de former un article, comprenant le modelage, l'extrusion, le calandrage, le moulage par injection, le moulage par rotation, le moulage par compression, le moulage par gonflage, ou le moulage par injection assisté au gaz de la composition selon l'une des revendications 1-10 pour former l'article.
